# FASCICULE DE BREVET EUROPEEN

(11) **EP 3 110 677 B1**
(45) Date de publication et mention de la délivrance du brevet: **31.01.2018**
(21) Numéro de dépôt: 15710828.3
(22) Date de dépôt: 23.02.2015
(51) Int. Cl.: B62B 3/00, B62B 3/02, F25D 23/06, B65D 6/24, B65D 6/34, B65D 21/08

(54) **CONTENEUR ISOTHERME POUR LA CONSERVATION DE PRODUITS DIVERS**
ISOTHERMISCHER BEHÄLTER ZUM KONSERVIEREN VON VERSCHIEDENEN MATERIALIEN
ISOTHERMAL CONTAINER FOR THE PRESERVATION OF VARIOUS MATERIALS

(30) Priorité: 24.02.2014 FR 1451461
(43) Date de publication de la demande: 04.01.2017
(73) Titulaire: Olivo, 42230 Roche La Molière (FR)
(72) Inventeur: OLIVO, Hélène-Françoise, 42230 Roche La Molière (FR)
(74) Mandataire: Cabinet Laurent & Charras
(86) Numéro de dépôt international: PCT/FR2015/000038
(87) Numéro de publication internationale: WO 2015/124836

(56) Documents cités:
- EP-A1- 1 860 034
- EP-A1- 2 412 640
- EP-A2- 1 238 705
- FR-A1- 2 907 202
- FR-A1- 2 989 359
- US-A- 4 006 947

## Description

Conteneur isotherme pour la conservation de produits divers.

L'invention concerne les conteneurs pour la conservation, froide ou chaude, de produits divers.

De façon connue, ce genre de conteneurs est en forme de caisse monolithique, soit verticale avec une porte frontale, soit horizontale avec une porte supérieure.

Les caisses et la porte sont en général réalisés séparément et composés d'une âme en matériau isolant qui est insérée soit entre des parois rigides en stratifiés verre-résine, soit entre des parois en matière plastique roto-moulées. La partie inférieure est en générale équipée de roulettes et la porte est munie de moyens de fermeture, associés ou non à des moyens de rigidification.

Pour la conservation froide la source de froid est constituée soit par des plaques eutectiques contenant un mélange liquide pouvant stocker les calories négatives, soit par un bac accueillant de la neige carbonique et pouvant assurer une conservation fraiche ou surgelée.

Ces conteneurs sont destinés à être déplacés entre un lieu de départ, où ils sont chargés produits à conserver et chargés en froid, et un lieu d'arrivée où ils sont déchargés de leur contenu. Ce déplacement aller et retour entre des locaux et un véhicule de transport implique de nombreuses manipulations. Celles-ci sont parfois réalisées sans soin particulier, par un personnel non attentif à la préservation du conteneur. Il en résulte que pour obtenir des conteneurs ayant une durée de vie satisfaisante, ceux ci sont conçus de façon à être résistants. Le corollaire est qu'ils sont relativement couteux, et que ce surcoût s'applique aux utilisateurs soigneux et aux conteneurs moins sujets à manipulations.

Les documents FR 2 989 359, EP 2 412 640, FR 2 907 202, EP 1 860 034, EP 1 238 705 et US 4 006 947 divulguent un état de l'art pertinent. L'invention concerne donc plus particulièrement les conteneurs isothermes comprenant :
- une caisse en matériau isolant rigide, sensiblement parallélépipédique, présentant une ouverture divisée en un espace de réception des produits et denrées à conserver en température et en un espace de réception de moyens caloporteurs,
- une porte en matériau isolant s'appliquant contre les bords de l'ouverture de la caisse pour fermer le conteneur de manière étanche,
- et des moyens de fermeture de la porte la mettant en compression contre les moyens d'appui de la caisse du conteneur.

Un premier objet de l'invention est de fournir des conteneurs moins lourds et moins onéreux, mais conservant au moins la même capacité d'isolation et une durée d'utilisation très satisfaisante, grâce à une bonne résistance au vieillissement et aux coups et chocs de manutention.

Un autre objet de l'invention est de fournir un conteneur multi composant permettant au fabricant de remplacer les composants abimés par les chocs et, permettant en modifiant le nombre de composants identiques, de réaliser des conteneurs ayant des capacités différentes.

Dans le conteneur selon l'invention, la caisse est formée par empilage d'éléments de caisse A en matériau isolant et présentant chacun une forme générale en U, dont les extrémités des ailes délimitent l'ouverture d'accès, ces éléments de caisse étant insérés entre deux éléments d'extrémité B. Ceux-ci ont une même section en U qu'eux, mais sont fermés d'un coté par une paroi transversale et sont renforcés par des châssis métalliques indépendants exerçant sur leurs parois transversales une force de compression. Cette force est générée par des tiges de serrage s'étendant entre les deux châssis et traversant les éléments de caisse A et les éléments extrêmes B.

Ainsi, pour augmenter le volume intérieur du conteneur, il suffit, lors de sa construction, d'augmenter le nombre d'éléments de caisse disposés entre les éléments extrêmes et d'utiliser des tiges de serrage plus longues, sous réserve d'utiliser une porte monolithique adaptée à l'ouverture de la caisse.

Par ailleurs, en cas de détérioration d'un ou de plusieurs éléments de caisse entrainant une diminution de leur résistance ou une réduction de leur capacité isolante, la réparation peut s'effectuer aisément en démontant le conteneur pour remplacer les éléments défaillants.

Dans une forme d'exécution préférée, la porte présente, dans chacun de ses bords longitudinaux, des paliers espacés dans lesquels sont disposées une tige métallique de renfort traversant la porte sur toute sa longueur, la dite porte comportant :
- du coté de son articulation sur la caisse et dans l'espace entre paliers, des bielles dont une extrémité est articulée sur sa tige de renfort et l'autre extrémité sur une tige de la caisse, et,
- de l'autre coté et dans les espaces entre paliers, des moyens d'accrochage passant dans des intervalles entre paliers de la caisse pour s'accrocher sur une tige de serrage de cette caisse.

Cet aménagement, permet de garantir le placage de la porte sur la caisse et le maintien des qualités de conservation du conteneur.

Avantageusement, les éléments de caisse, les éléments d'extrémité et la porte sont monolithiques et réalisés en matériau cellulaire expansé, par exemple en polypropylène expansé.

Ainsi, ces éléments présentent un coeur très isolant protégé par une peau de surface plus dure et plus résistante aux chocs et rayures.

En outre, l'usage d'un matériau unique pour réaliser la caisse et la porte du conteneur, au lieu d'utiliser la conception traditionnelle utilisant un complexe formé par des parois composites, verre-résine, entre lesquelles une mousse isolante expansible est injectée, facilite le recyclage en fin de vie du conteneur.

Ce recyclage est aussi facilité par la réduction du nombre de composants et par leur mode d'assemblage, sans colle ni visserie nombreuse, qui réduit la durée du démantèlement, avant répartition des matériaux pour leur recyclage.

Dans une forme de réalisation, le positionnement relatif et l'étanchéité entre les éléments assemblés, respectivement de caisse et d'extrémité, est assurée par des nervures, saillant d'une aile et de la moitié du bord transversal de chaque élément, ces nervures pénétrant dans des gorges ménagées dans une aile et la moitié du bord transversal de l'élément en vis-à-vis, nervures et gorges étant disposées de manière inverse sur les faces opposées de chacun des éléments de caisse.

Lors de l'empilement des éléments, les nervures des éléments pénètrent dans les gorges d'autres éléments et assurent, de manière simple, l'étanchéité des plans de joint entre éléments.

De préférence, la face en bout de chacune des ailes des éléments de caisse A et celle des éléments d'extrémité B comporte une nervure saillant de la face d'appui pour la porte, s'étendant parallèlement aux tiges de serrage F et présentant, à chacune de ses extrémités, une excroissance apte à s'écraser élastiquement contre les excroissances des éléments empilés pour assurer la continuité de la barrière d'étanchéité ceinturant l'ouverture de la caisse.

Avantageusement et pour garantir, le respect dans le temps de l'étanchéité de la cavité intérieure, la porte présente, en saillie de sa face venant en appui contre le bord de l'ouverture de la caisse, une nervure continue entourant la barrière d'étanchéité formée par juxtaposition des nervures des éléments de caisse et des éléments d'extrémité.

L'invention sera mieux comprise à l'aide de la description qui suit en référence au dessin annexé représentant une forme d'exécution d'un conteneur avec ouverture latérale et dans lequel :
Figure 1 est une vue en perspective éclatée d'un conteneur vertical de capacité moyenne ;
Figures 2 et 3 sont des vues en perspective par l'avant et de chaque coté du conteneur de figure 1, quand sa porte est en position de fermeture ;
Figure 4 est une vue en perspective montrant, à échelle agrandie, une forme d'exécution d'un élément de caisse ;
Figures 5 et 6 sont des vues, en élévation et à échelle réduite, de l'élément de caisse quand il est vu, respectivement, par l'arrière et par l'avant ;
Figures 7 et 8 sont des vues, respectivement, en perspective et en plan par-dessus d'une forme d'exécution de l'élément d'extrémité ;
Figure 9 est une vue en plan par-dessus d'une forme d'exécution du châssis de serrage ;
Figures 10 et 11 sont des vues en coupe transversales et à échelle agrandie montrant le conteneur quand sa porte est en position, respectivement, de fermeture et d'ouverture avec rabattement contre le conteneur ;
Figure 12 est une vue partielle et à échelle très agrandie montrant en coupe transversale une forme de réalisation des moyens de crochetage de la porte sur la caisse, quand ces moyens sont en cours de tirage sur la tige de fermeture ;
Figure 13 est une vue partielle, en perspective et à échelle très agrandie, des moyens de crochetage de figure 12, quand ils sont en position de crochetage ;
Figure 14 est une vue de face en élévation du conteneur quand sa porte est rabattue contre sa paroi latérale ;
Figure 15 est une vue en perspective du conteneur porte ouverte, non rabattue.
Figures 16 et 17 sont des vues partielles en coupe montrant, à échelle agrandie, une forme d'exécution des moyens d'étanchéité entre éléments ;
Figure 18 est une vue de face schématique de la caisse d'un conteneur montrant les zones de contact réciproques des barrières d'étanchéité formées sur la caisse et par la porte ;
Figure 19 est une vue partielle à échelle agrandie et en coupe, hors zone des charnières et paliers, d'une porte en appui contre la caisse.

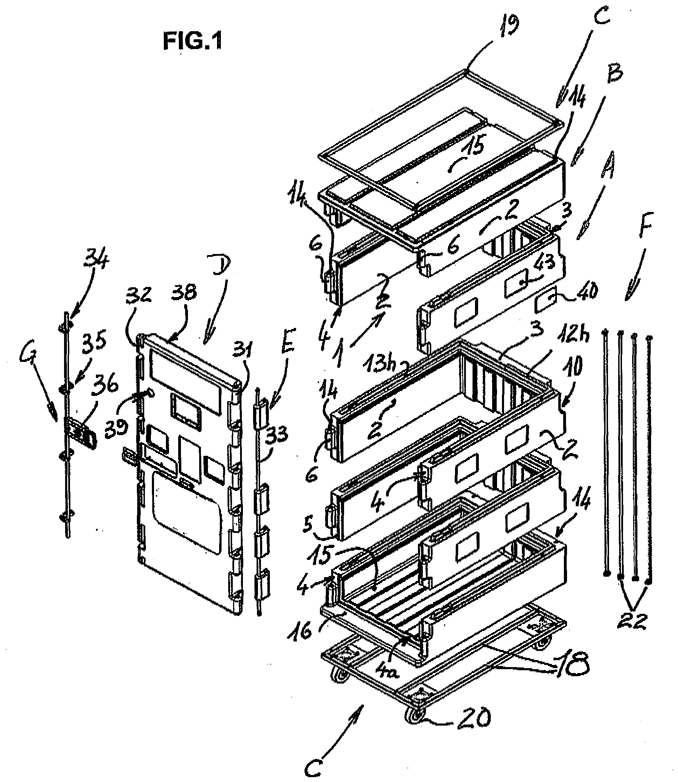

La figure 1 montre que le conteneur est formé par assemblage des composants suivants :
- des éléments de caisse A,
- des éléments d'extrémités B,
- deux châssis extrêmes C,
- une porte D,
- des bielles E d'articulation de la porte sur la caisse
- des tiges métalliques F de liaison par serrage des éléments,
- des moyens de crochetage G pour verrouiller la porte en position de fermeture sur la caisse.

Les éléments de caisse A, les éléments d'extrémité B et la porte D sont réalisés en matériau cellulaire expansé, et par exemple en polypropylène expansé, qui leur confère un très bon coefficient d'isolation thermique et, par une peau de surface lisse et dure, une résistance à l'usure par abrasion, par chocs et par les agressions habituelles en exploitation.

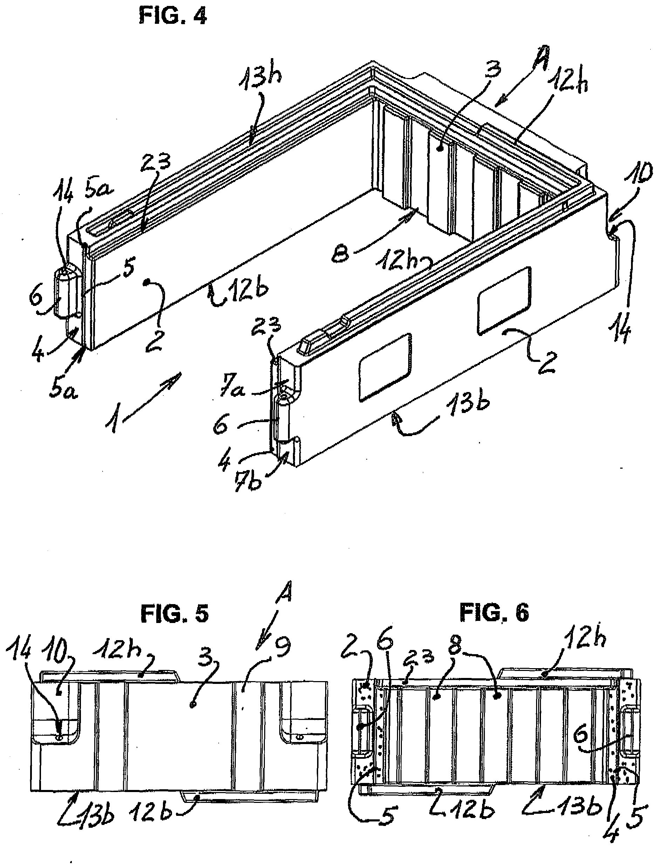

Comme le montrent en détail les figures 4 à 6 chaque élément de caisse A présente une forme générale en U couché avec deux ailes 2, formant les parois latérales du conteneur, et une âme 3 constituant la paroi transversale arrière du conteneur. Les extrémités des ailes 2 délimitent l'ouverture 1 d'accès au conteneur et présentent une face d'appui 4 de laquelle fait saillie une nervure 5, allant de la face inférieure à la face supérieure de l'élément. Un palier 6, qui est vertical dans cette forme d'exécution, fait saillie de la face d'appui en bout de chacune des ailes 2. Il est disposé sensiblement à mi hauteur de manière à laisser des espaces, respectivement 7a et 7b, au dessus et au dessous de lui.

L'âme 3 de l'élément A, formant la paroi transversale arrière du conteneur, comporte, dans sa face tournée vers l'espace délimité entre les ailes 2, des rainures espacées 8 s'étendant verticalement. Son dos présente des rainures 9, tandis qu'elle comporte, dans chacun de ses deux angles extérieurs arrière, au moins un évidement 10 qui, dans cette réalisation, est tourné vers le haut.

Chaque élément de caisse A présente encore des moyens de positionnement relatif et d'étanchéité de la jonction entre éléments superposés. Dans la forme d'exécution représentée, ces moyens sont composés, d'une part, de nervures 12h, saillant vers le haut du bord supérieur d'une aile 2 et de la moitié de l'âme 3, et, d'autre part, de nervures 12b saillant vers le bas à partir de la face inférieure de l'aile opposée 2 et de l'autre moitié de l'âme 3.

Ces nervures 12h et 12b sont destinées à coopérer avec des gorges 13h et 13b débouchant des faces, respectivement supérieure et inférieure de l'élément, et dans le prolongement des nervures.

Enfin, chaque élément A est traversé verticalement par quatre cheminées verticales 14, disposées dans ses angles arrière et dans les paliers 6, bordant l'ouverture disposée.

Chaque élément d'extrémité B se différencie des éléments de caisse A par la présence d'un fond 15 fermant l'espace entre les ailes 2 et par un retour 16, formant seuil ou casquette pour la porte D. Le fond 15 comporte des rainures 17 parallèles à ses ailes 2 et qui sont disposées pour venir en coïncidence avec les rainures 8 ménagées dans la partie de son âme 3 tournée vers l'intérieur du conteneur.

Cet élément comporte aussi des nervure 12h et des rainures 13h, mais uniquement sur son coté opposé au fond 15.

Le retour 16 s'étend sur l'avant sur une distance lui permettant de protéger la totalité de l'épaisseur de la porte venant en appui contre l'épaulement 4a dont il est muni.

L'élément B comporte aussi quatre cheminées 14 pour le passage des tiges métalliques de serrage F.

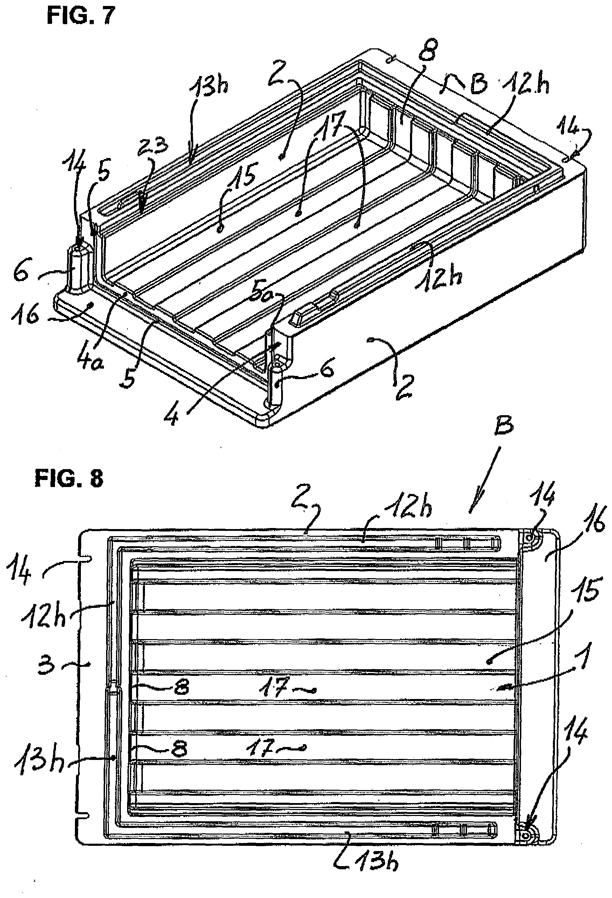

L'élément d'extrémité B peut être disposé avec sa cavité centrale débouchant vers le haut, comme montré aux figures 1 et 7, ou débouchant vers le bas, comme montré à la figure 1.

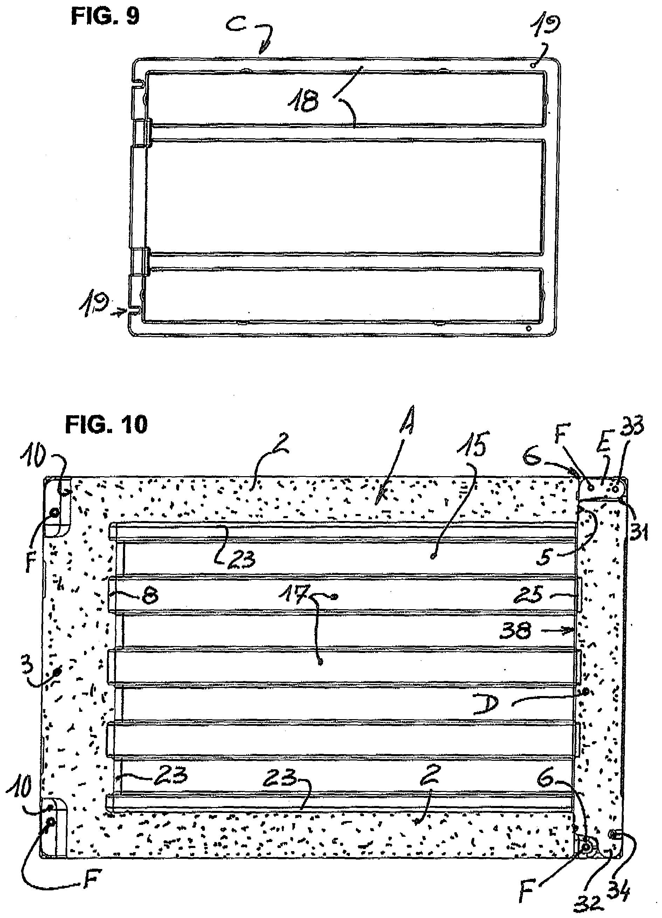

Comme le montrent les figures 1 et 9, chaque châssis C est constitué par des profilés métalliques 18 soudés en formant un cadre renforcé apte à venir en appui contre les éléments B, en épousant leur contour. Il est traversé par quatre trous 19 ayant la même répartition que les cheminées 14 des éléments A et B. Le châssis inférieur est équipé de roulettes 20.

Dans une variante de réalisation, le châssis supérieur est composé de deux profilés métalliques en U se disposant à la place des longerons du châssis montré à la figure 9. La fonction de rigidification est la même, mais l'aspect esthétique de conteneur est amélioré.

La construction d'un conteneur est très rapide et très facile puisqu'elle consiste à superposer un certain nombre d'éléments de caisse A, trois dans l'exemple représenté, à disposer cet empilage entre deux éléments d'extrémité B, renforcés par leur châssis C, puis à engager dans les trous 19 et cheminées 14 les tiges métalliques F, en prenant soin de mettre en place les bielles E décrites plus loin. La liaison définitive est assurée par visage d'écrous 22 (figure 1) sur les extrémités filetées de chacune des quatre tiges F. Ce serrage engage les nervures 12h et 12b dans les gorges 13h et 13b des éléments et assure non seulement le positionnement des éléments, mais aussi la liaison entre éléments et l'étanchéité de leurs plans de joint.

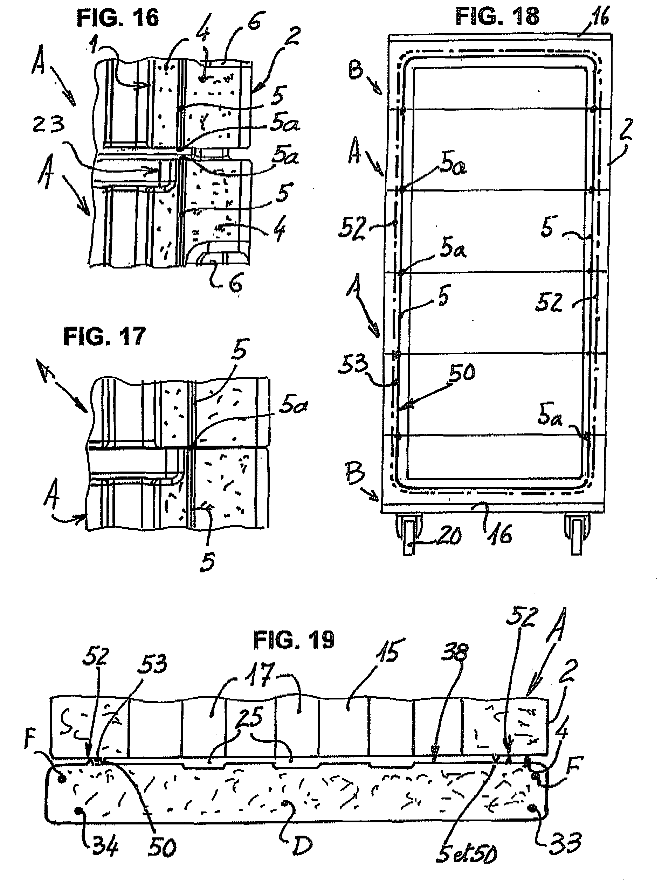

On notera d'ailleurs que pour parfaire cette étanchéité périphérique, la longueur du fragment de nervure 12h saillant de l'âme des éléments A et B est légèrement plus grand que la longueur de la gorge devant la recevoir. Ainsi, lors de l'assemblage des éléments A et B, l'extrémité de la nervure saillant de l'élément supérieur viennent buter contre l'extrémité de celle saillant de l'élément inférieur, pour former, par déformation élastique, une continuité dans la barrière d'étanchéité entre éléments.
Il en est de même pour les nervures 5 qui, comme le montrent les figures 16 et 17, présentent, à chacune de leurs extrémités, une excroissance 5a formant une petite saillie dépassant du plan de jonction entre éléments. Lors du serrage des apte des éléments A et B empilés, ces excroissances s'écrasent élastiquement contre les excroissances en vis à vis pour assurer la continuité de la barrière d'étanchéité 50 que les nervures 5 forment autour de l'ouverture 1 de la caisse.

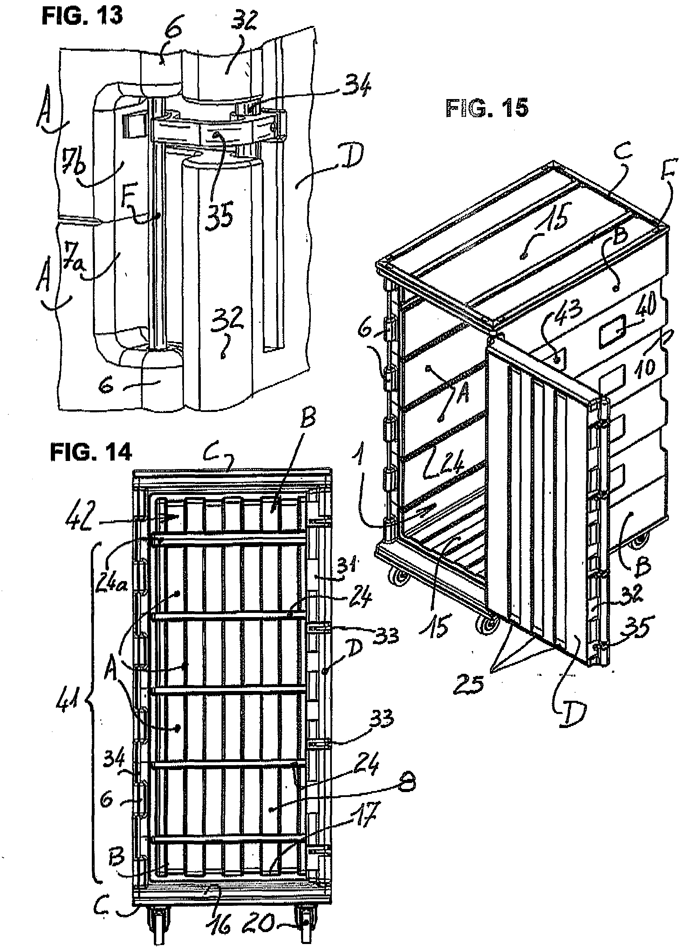

Les figures 4 et 7 montrent que chaque élément de caisse A et chaque élément d'extrémité B est bordé intérieurement, près de son plan de jonction avec un autre élément, et le long des ses ailes 2 et de son âme 3, par un épaulement 23 formant, avec l'épaulement de l'élément en vis-à-vis, une glissière 24 pour les clayettes de rangements des denrées et produits à conserver, comme montré plus particulièrement figure 14.

La glissière supérieure 24a sépare dans la caisse l'espace 41 de conservation des produits de l'espace 42 de réception des moyens caloporteurs. Cette glissière est utilisée pour la mise en place des moyens caloporteurs pouvant être constitués par une plaque eutectique, par un tiroir contenant de la neige carbonique...

Cette même figure 14 montre que les rainures 8, ménagées dans les âmes 3 des éléments A et B, donc dans la paroi arrière du conteneur obtenu par assemblage de ces éléments A et B, et celles 17 ménagées dans les fonds 15 des éléments B, coïncident avec celles 25 ménagées dans la face intérieure de la porte D, visibles à figure 15, pour former des canaux annulaire de circulation de l'air. Ceux-ci favorisent les déplacements des courants thermiques de convection entre la partie supérieure du conteneur et sa partie inférieure, en améliorant l'homogénéisation de la température de l'espace 41 de conservation, sans recours à un quelconque moyen supplémentaire, mécanique ou électrique.

Enfin, la figure 10 montre que les dégagements 10, ménagés à l'arrière et à l'extérieur des éléments de caisse A, permettent de saisir manuellement chacune des tiges arrière F, par exemple pour déplacer le conteneur, chargé ou non. Cet aménagement s'effectue sans frais supplémentaire et sans modifier les qualités d'isolement du conteneur.

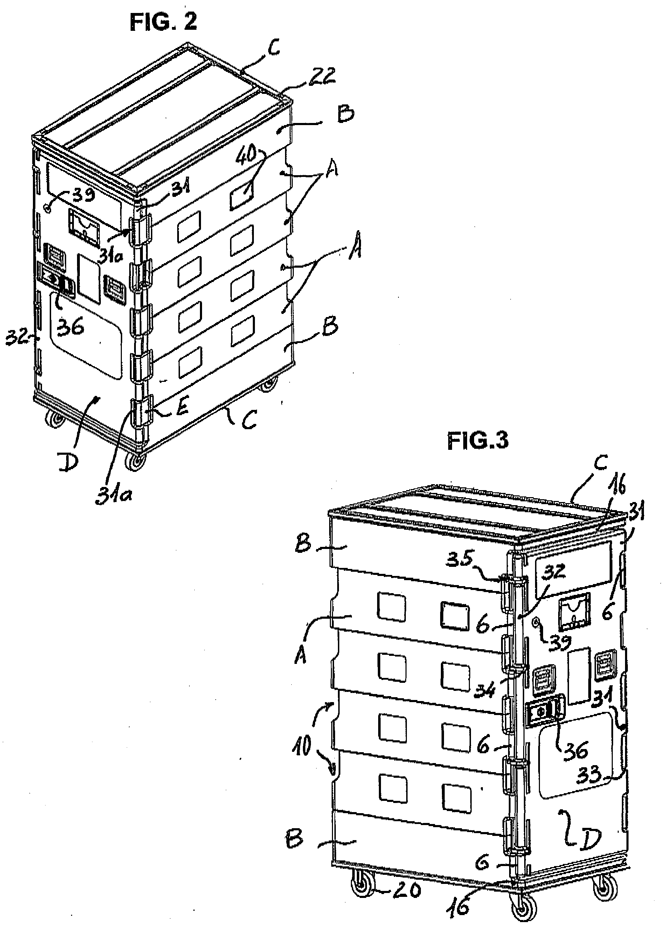

La porte montrée aux figures 1 à 3 et 10 à 15 est monolithique et présente, venant de moulage et sur ses deux bords longitudinaux, des paliers espacés, respectivement, 31 sur son bord articulé sur la caisse et 32 de l'autre coté. Ces paliers 31 et 32 reçoivent chacun une tige métallique de renfort, respectivement 33 et 34, qui s'étend sur la hauteur de la porte, sans en dépasser.

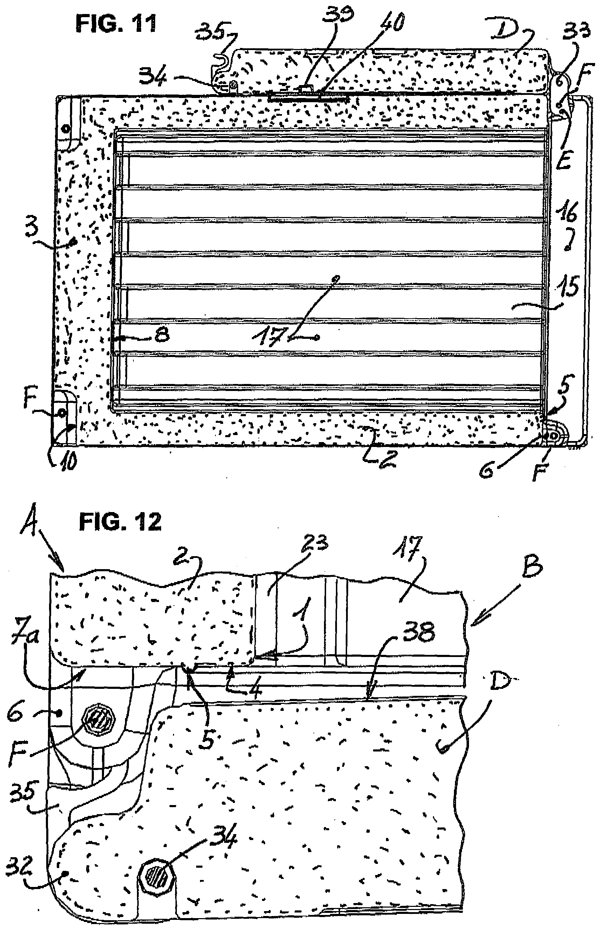

Les bielles d'articulation E sont disposées, sur la porte, dans des espaces entre paliers 31 et sur la caisse dans les intervalles formés par juxtaposition des espaces 7a et 7b entre paliers 6. L'une de leurs extrémités est montée libre en rotation sur la tige 33 de la porte, tandis que leur autre extrémité est montée libre en rotation sur la tige F de liaison des ailes 2 des éléments A et B. La forme des bielles E permet de rabattre la porte D contre la paroi latérale du conteneur, comme le montre la figure 11.

La figure 13 montre que dans les espaces entre paliers 32 de la porte sont disposés les crochets 35 des moyens de crochetage G, moyens comprenant aussi, dans la forme de réalisation représentée, la tige 34 sur laquelle ces crochets sont fixés et un levier 36 de mise en rotation de la tige 34.

Bien évidemment, les bords longitudinaux et transversaux de la porte sont définis et moulés en fonction de la forme des parois contre lesquelles ils vont être appliqués lors de la fermeture de la porte.

Grâce à cela et comme le montre la figure 12, quand la porte est ramenée contre l'ouverture du conteneur sa face interne 38 se rapproche de la nervure périphérique d'étanchéité 5, tandis que les crochets 35, en prise avec la tige F de la caisse, tirent la porte jusqu'à ce qu'elle soit en appui contre le bord de l'ouverture, comme montré figure 10.

La figure 1 montre que la porte D est équipée d'un aimant 39 saillant de sa face avant et que l'élément de caisse A qui est le plus haut est muni d'une plaque métallique 40 incrustée dans un logement en retrait 43. Avec ces moyens magnétiques, quand la porte D est rabattue contre la paroi du conteneur, comme montré figure 11, l'aimant 39 se colle à la plaque 40 et assure le maintien de cette porte. La figure 14 montre que dans cette position, et grâce à son ouverture sur 270 degrés, la porte D est peu encombrante et ne gène ni le chargement, ni le déchargement du conteneur, et ainsi est moins soumise à des chocs et à des frottements pouvant la détériorer.

Dans la forme d'exécution montrée aux figures 18 et 19, la barrière d'étanchéité 50, formée par les nervures 5 et leurs excroissances 5a, est confortée par une nervure 52, saillant de la face interne 38 de la porte D et disposée sur celle-ci de manière à entourer la barrière 50. Ainsi, dans les conditions normales d'étanchéité, les deux barrières 50 et 52 forment un canal d'air 53 s'opposant aux transferts thermiques avec l'extérieur et, en cas de perte d'étanchéité dans la barrière 50, la nervure 52 assure seule l'étanchéité et garantit les conditions de conservation des produits dans le conteneur.

Les nervures 5 et 52 sont formées par le matériau constitutif des éléments A et B et de la porte D, ce qui présente l'avantage d'éviter d'avoir recours à des joints devant être rapportés et augmentant le coût et le temps de fabrication.

Ces nervures s'écrasent élastiquement contre leurs faces d'appui sous l'action des moyens de crochetage rapprochant avec force la porte D contre les faces d'appui du conteneur.

Il est précisé que ces moyens de fermeture par crochetage peuvent présenter toute autre forme, pourvu qu'à la fermeture ils rapprochent la porte D de ses appuis

Il ressort de ce qui précède que le conteneur selon l'invention:
- est composé d'éléments peu couteux et dont l'assemblage nécessite peu d'éléments métalliques complémentaires, tels que visserie et accastillage divers, ni de colle ou solvant polluant ;
- fait appel à un nombre réduit de composants facilement et rapidement assemblables par des tiges visées procurant la rigidité de la construction ;
- met en oeuvre des matériaux cellulaire légers mais résistants, permettant de gagner de l'ordre de 40% en poids à vide, réduisant la charge transportable et la consommation des moyens de transport des conteneurs ;
- et procure une isolation thermique au moins égale à celle des conteneurs de l'état de la technique.

## Revendications

1. Conteneur isotherme pour la conservation de produits divers, ce conteneur comprenant
- une caisse en matériau isolant rigide présentant une cavité divisée en un espace (41) de réception des produits à conserver en température et en un espace (42) de réception de moyens caloporteurs
- une porte (D) en matériau isolant venant en applique contre une ouverture,
- et des moyens de verrouillage G de la porte en une position fermée,
la caisse est formée par empilage d'éléments de caisse A en matériau isolant et présentant une forme générale en U dont les extrémités des ailes (2) délimitent une ouverture d'accès (1), ces éléments de caisse A étant insérés entre des éléments d'extrémité B; **caractérisé en ce que** chacun des éléments de caisse A présente une forme générale en U; les éléments d'extrémité B sont de même section en U qu'eux mais fermés d'un coté par une paroi transversale (15) et sont renforcés par des châssis extrêmes C, métalliques et indépendants, exerçant sur leurs parois transversales une force de compression produite par des tiges de serrage F s'étendant entre les deux châssis C et traversant les éléments de caisse A et les éléments d'extrémités B.

2. Conteneur isotherme selon la revendication 1 **caractérisé en ce que** la porte, D présente dans chacun de ses bords longitudinaux des paliers espacés (31 ou 32) dans lesquels sont disposées une tige métallique de renfort (33 ou 34) traversant la porte sur toute sa longueur, la dite porte comportant :
- du coté de son articulation sur la caisse et dans l'espace entre les paliers (31), des bielles E dont une extrémité est articulée sur sa tige de renfort (33) et, l'autre extrémité, sur une tige F de la caisse, et,
- de l'autre coté et dans les espaces entre les paliers (32), des moyens d'accrochage (35) passant dans des intervalles (7a-7b) entre les paliers de la caisse pour s'accrocher sur une tige F de cette caisse.

3. Conteneur isotherme selon la revendication 1 **caractérisé en ce que** les éléments de caisse A, les éléments d'extrémité B et la porte D sont réalisés en un matériau cellulaire expansé, et par exemple en polypropylène expansé.

4. Conteneur isotherme selon la revendication 1 **caractérisé en ce qu'**un positionnement relatif et une étanchéité entre les éléments assemblés, respectivement, A de caisse et B d'extrémité, sont assurés par des nervures, (12h et 12 b) saillant d'une aile (2) et de la moitié de l'âme (3) de chaque élément, ces nervures (12h et 12b) pénétrant dans des gorges (13h et 13b) ménagées dans une aile (2) et la moitié de l'âme (3) des éléments A ou B en vis-à-vis, nervures et gorges étant distribuées de manière inverse sur les faces opposées de chacun des éléments de caisse A.

5. Conteneur isotherme selon la revendication 1 **caractérisé en ce que** chaque élément, respectivement de caisse A et d'extrémité B, est bordé intérieurement, près d'un plan de jonction avec un autre élément, et le long des ses ailes (2) et de son âme (3), par un épaulement (23) formant, avec l'épaulement (23) de l'élément en vis-à-vis, une glissière (24) de réception des clayettes de rangements des denrées et produits à conserver.

6. Conteneur isotherme selon la revendication 1 **caractérisé en ce que** chaque élément de caisse A comporte, dans ses deux angles extérieurs opposés, à l'extrémité de ses ailes (2) et sur une partie de sa hauteur, un évidement (10) permettant de saisir manuellement la tige F traversant cet angle.

7. Conteneur isotherme selon la revendication 1 **caractérisé en ce que** chacun des deux éléments d'extrémité B comporte, dans sa paroi transversale (15) et à l'intérieur de la caisse, des rainures (17) qui, espacées et parallèles à ses ailes (2), communiquent avec des rainures longitudinales (25) ménagées dans la face intérieure de la porte D et avec des rainures (8) ménagées dans l'âme (3) des éléments A et B en formant des canaux annulaires de circulation des mouvements thermiques de convection.

8. Conteneur isotherme selon la revendication 1 **caractérisé en ce que** la porte D présente en saillie de sa face externe un aimant (39) apte, en une position d'ouverture et de rabattement à 270° contre la caisse, à coopérer avec une plaque métallique (40) fixée contre la face externe de la caisse.

9. Conteneur isotherme selon la revendication 1 **caractérisé en ce qu'**une face en bout (4) de chacune des ailes (2) des éléments de caisse A et une face en bout des éléments d'extrémité B comporte une nervure (5) qui, saillant de la face d'appui pour la porte D, s'étend parallèlement aux tiges de serrage F et présente, à chacune de ses extrémités, une excroissance (5a) apte à s'écraser élastiquement contre des excroissances des éléments A ou B empilés pour assurer la continuité d'une barrière d'étanchéité (50) que ces nervures forment en ceinturant l'ouverture (1) de la caisse.

10. Conteneur isotherme selon la revendication 9 **caractérisé en ce que** la porte D présente, en saillie de sa face (25) venant en appui contre la face (4) de la caisse, une nervure continue (52) entourant la barrière d'étanchéité (50) formée par juxtaposition des nervures (5) des éléments de caisse A et des éléments d'extrémité B.

## Patentansprüche

1. Isothermbehälter zur Konservierung verschiedenster Produkte, bestehend aus
- einem starren Kasten aus Isoliermaterial mit einem Hohlraum, der in einen Bereich (41) zur Aufnahme der auf Temperatur zu haltenden Produkte und in einen Bereich (42) zur Aufnahme der Kühlmittel unterteilt ist,
- einer Tür (D) aus Isoliermaterial, die an einer Öffnung anliegt,
- Mitteln G zum Verriegeln der Tür in geschlossener Position,
wobei der Kasten durch Stapelung von Kastenelementen A aus Isoliermaterial und in der allgemeinen Form eines U gebildet wird, deren Flügelenden (2) eine Zugangsöffnung (1) definieren, wobei diese Kastenelemente A zwischen Endelemente B eingefügt werden, **dadurch gekennzeichnet, dass** jedes der Kastenelemente A die allgemeine Form eines U aufweist; die Endelemente B weisen den gleichen U-Querschnitt wie die Kastenelemente A auf, sind aber auf einer Seite durch eine Querwand (15) geschlossen und werden durch unabhängige Endgestelle C aus Metall verstärkt, die an deren Querwänden eine Kompressionskraft ausüben, die durch die Spannstangen F erzeugt wird, welche zwischen den beiden Gestellen C verlaufen und durch die Kastenelemente A und die Endelemente B führen.

2. Isothermbehälter nach Anspruch 1, **dadurch gekennzeichnet, dass** die Tür D an jeder ihrer Längskanten beabstandete Lager (31 oder 32) aufweist, in denen eine Metallstrebe (33 oder 34) angeordnet ist, welche durch die Tür in ihrer ganzen Länge führt, wobei die Tür:
- an der Seite, an der sie an den Kasten angelenkt ist, und im Bereich zwischen den Lagern (31) Pleuel E umfasst, deren eines Ende an ihre Strebe (33) und deren anderes Ende an eine Stange F des Kastens angelenkt sind, und
- an der anderen Seite und in den Bereichen zwischen den Lagern (32) Festhakmittel (35) umfasst, die durch die Zwischenräume (7a-7b) zwischen den Lagern des Kastens führen, um an einer Stange F dieses Kastens festgehakt zu werden.

3. Isothermbehälter nach Anspruch 1, **dadurch gekennzeichnet, dass** die Kastenelemente A, die Endelemente B und die Tür D aus zellulär geschäumtem Material, und beispielsweise aus geschäumtem Polyropylen, gefertigt sind.

4. Isothermbehälter nach Anspruch 1, **dadurch gekennzeichnet, dass** eine relative Positionierung und Dichtheit zwischen den zusammengefügten Elementen, und zwar den Kastenelementen A und den Endelementen B, über Rippen (12h und 12b) sichergestellt werden, die aus einem Flügel (2) und dem halben Kern (3) eines jeden Elements hervorstehen, wobei die Rippen (12h und 12b) in die Nuten (13h und 13b) eindringen, die in einem Flügel (2) und dem halben Kern (3) der einander gegenüberliegenden Elemente A oder B ausgebildet sind, wobei die Rippen und Nuten entgegengesetzt über die einander gegenüberliegenden Seiten eines jeden Kastenelementes A verteilt sind.

5. Isothermbehälter nach Anspruch 1, **dadurch gekennzeichnet, dass** jedes Element, und zwar Kastenelement A und Endelement B, innen, nahe einer Verbindungsebene mit einem anderen Element, und entlang seiner Flügel (2) und seines Kerns (3) über einen Bund (23) eingefasst wird, und mit dem Bund (23) des gegenüberliegenden Elementes eine Gleitschiene (24) zur Aufnahme von Einschüben zur Lagerung von zu konservierenden Lebensmitteln und Produkten zu bilden.

6. Isothermbehälter nach Anspruch 1, **dadurch gekennzeichnet, dass** jedes Kastenelement A an seinen beiden gegenüberliegenden Außenwinkeln, am Ende seiner Flügel (2) und über einen Teil seiner Höhe eine Aussparung (10) aufweist, die ein manuelles Ergreifen der durch diesen Winkel führenden Stange F ermöglicht.

7. Isothermbehälter nach Anspruch 1, **dadurch gekennzeichnet, dass** jedes der beiden Endelemente B in seiner Querwand (15) und im Kasteninneren Rippen (17) umfasst, die im Abstand und parallel zu seinen Flügeln (2), mit den Längsrippen (25) in Verbindung stehen, die in der Innenseite der Tür D ausgebildet sind, und mit den Rippen (8) in Verbindung stehen, die im Kern (3) der Elemente A und B ausgebildet sind, und dabei ringförmige Kanäle zur Zirkulation von thermischen Konvektionsbewegungen bilden.

8. Isothermbehälter nach Anspruch 1, **dadurch gekennzeichnet, dass** die Tür D an ihrer Außenseite hervorstehend einen Magneten (39) aufweist, der in einer Öffnungs- und Anklappposition um 270° gegen den Kasten befähigt ist, mit einer Metallplatte (40) zusammenzuwirken, die an der Außenseite des Kasten befestigt ist.

9. Isothermbehälter nach Anspruch 1, **dadurch gekennzeichnet, dass** eine Stirnseite (4) eines jeden Flügels (2) der Kastenelemente A und eine Stirnseite der Endelemente B eine Rippe (5) umfasst, die, aus der Anlagefläche für die Tür D hervorstehend, parallel zu den Spannstangen F verläuft und an jedem seiner Enden eine Auskragung (5a) aufweist, die befähigt ist, gegen die gestapelten Auskragungen der Elemente A oder B einzufedern, um die Kontinuität einer Dichtungsbarriere (50) zu gewährleisten, welche diese Rippen durch Umschließen der Kastenöffnung (1) bilden.

10. Isothermbehälter nach Anspruch 9, **dadurch gekennzeichnet, dass** die Tür D an ihrer an der Seite (4) des Kastens anliegenden Seite (25) hervorstehend eine durchgehende Rippe (52) aufweist, die die Dichtungsbarriere (50) umschließt, welche durch Nebeneinanderstellung der Rippen (5) der Kastenelemente A und der Endelemente B gebildet wird.

## Claims

1. Isothermal container for preserving various materials, said container comprising
- a body made of an rigid insulating material having a cavity divided into a space (41) for receiving the products to preserve in temperature and in a space (42) for receiving heat exchanging means,
- a door (D) made of insulating material coming into contact with an opening,
- and locking means G of the door in a closed position,
the body is formed by stacking body elements A made of insulating material and which are generally U-shaped, and the ends of wings (2) define an access opening (1), said body elements A being inserted between end elements B **characterized in that** each of said body elements A is generally U-shaped; the end elements B present the same U-section but closed on one side by a transversal wall (15)and are reinforced by extreme metal and independent frames C, exerting on their transverse walls a compressive strength produced by clamping rods F extending between the two frames C and passing through the body elements A and the end elements B.

2. Isothermal container according to claim 1, **characterized in that** the door D has spaced bearings (31 or 32) in each of its longitudinal edges, in which is disposed a metal reinforcing rod (33 or 34) passing through the door along its entire length, said door comprising:
- on the side of its hinged connection to the body and in the space between the bearings (31), connecting rods E whose one end is hinged to its reinforcing rod (33) and the other end on a rod F of the body, and,
- on the other side and in the spaces between the bearings (32), attachment means (35) passing through gaps (7a-7b) between bearings of the body to engaged a rod F of said body.

3. Isothermal container according to claim 1, **characterized in that** the body elements A, the end elements B and the door D are made of a expanded cellular material, and for example of expanded polypropylene.

4. Isothermal container of claim 1, **characterized in that** a relative positioning and sealing between the body elements A and end elements B assembled, respectively, are provided by ribs (12 and 12 b) projecting from a wing (2) and half of the core (3) of each element, said ribs (12h and 12b) penetrating into grooves (13h and 13b) arranged in a wing (2) and half of the core (3) of the elements A or B in a facing arrangement, said ribs and grooves being distributed reversely on the opposite sides of each of the body elements A.

5. Isothermal container according to claim 1, **characterized in that** each body element A and end element B, respectively, is bounded internally near a junction plane with another element, and along its wings (2) and its core (3) by a shoulder (23) forming, with the shoulder (23) of the opposite element, a slider (24) for receiving the storage shelves for foodstuffs and products to preserve.

6. Isothermal container according to claim 1, **characterized in that** each body unit A comprises, in its two opposite outer angles, at the end of its wings (2) and on a part of its height, a recess (10) allowing to manually catch the rod F passing through this angle.

7. Isothermal container according to claim 1, **characterized in that** each of the two end members B comprises, in its transversal wall (15) and inside the body, slots (17) spaced and parallel to its wings (2), communicating with longitudinal slots (25) arranged in the inner face of the door D and with slots (8) arranged in the core (3) of the elements A and B, thus forming annular flow channels of the convection thermal motions.

8. Isothermal container according to claim 1, **characterized in that** the door D has, projecting from its external face, a magnet (39) which, in an open position and folded at 270° against the body, is able to cooperate with a metal plate (40) secured against the external face of the body.

9. Isothermal container according to claim 1, **characterized in that** an end face (4) of each wing (2) of the body elements A and an end face of the end elements B has a rib (5) which, projecting from the abutment face for the door D, extends parallel to the clamping rods F and has, at each of its ends, a projection (5a) adapted to engage elastically projections of the stacked elements A or B to ensure the continuity of a sealing barrier (50) formed by these ribs by surrounding the opening (1) of the body.

10. Isothermal container according to claim 9, **characterized in that** the door D has, projecting from its face (25) abutting against the face (4) of the body, a continuous rib (52) around the sealing barrier (50) formed by juxtaposition of the ribs (5) of the body elements A and end elements B.
